# EUROPEAN PATENT SPECIFICATION

(11) **EP 3 237 188 B1**
(45) Date of publication and mention of the grant of the patent: **07.07.2021**
(21) Application number: 15837093.2
(22) Date of filing: 19.11.2015
(51) Int. Cl.: B29D 30/00, B65H 54/28

(54) **PLANT FOR COLLECTING OR DISPENSING AN ELONGATED ELEMENT FOR BUILDING TYRES AND METHOD FOR COLLECTING OR DISPENSING AN ELONGATED ELEMENT WOUND IN REELS**
ANLAGE ZUM SAMMELN ODER AUSGEBEN EINES LÄNGLICHEN ELEMENTS ZUR HERSTELLUNG VON REIFEN UND VERFAHREN ZUM SAMMELN ODER AUSGEBEN EINES LÄNGLICHEN, IN ROLLEN GEWICKELTEN ELEMENTS
INSTALLATION POUR LA COLLECTE OU LA DISTRIBUTION D'UN ÉLÉMENT ALLONGÉ POUR LA CONSTRUCTION DE PNEUMATIQUES ET PROCÉDÉ POUR LA COLLECTE OU LA DISTRIBUTION D'UN ÉLÉMENT ALLONGÉ ENROULÉ EN BOBINES

(30) Priority: 24.12.2014 IT PD20140362
(43) Date of publication of application: 01.11.2017
(73) Proprietor: Pirelli Tyre S.p.A., 20126 Milano (IT)
(72) Inventor: BIGOGNO, Mauro, I-20126 Milano (IT)
(74) Representative: Susanetto, Carlo
(86) International application number: PCT/IB2015/058962
(87) International publication number: WO 2016/103077

(56) References cited:
- WO-A1-91/18817
- WO-A1-2009/040594
- WO-A1-2012/085776
- WO-A1-2014/011033
- NL-C2- 2 001 509
- US-A- 4 352 467
- US-A1- 2007 068 617
- US-A1- 2009 320 989
- None

## Description

The present invention relates to a plant for collecting an elongated element intended for building tyres or for dispensing it to a tyre building station.

The invention further relates to a method for collecting an elongated element so as to be wound on a reel, in the region of a production station thereof, and a method for supplying the elongated element which is wound in reels to a tyre building station.

A tyre generally comprises a carcass structure which is torically formed about an axis of rotation and which includes at least one carcass ply which has end edges which engage in annular securing structures, known as bead cores, respectively.

In a radially external position with respect to the carcass structure, there is provided a belt structure comprising, in the case of tyres for motor cars, at least two radially superimposed strips of rubber fabric provided with reinforcement cords, usually of metal, which are arranged parallel with each other in each strip but crossed with respect to the cords of the adjacent strip, preferably symmetrically with respect to the equatorial plane of the tyre.

Preferably, the belt structure further also comprises in a radially external position, at least at the ends of the belt strips below, a third layer of textile or metal cords which are arranged circumferentially (at 0 degrees). In tyres of the tubeless type there is further provided a radially internal layer which is referred to as a liner and which has impermeability characteristics in order to ensure the airtightness for the tyre itself.

In a radially external position with respect to the belt structure, there is applied a tread band which is produced from elastomer material and on which there is defined a tread pattern which is intended for contact with the road surface.

A process for producing tyres provides for a first tyre building step, in which the various components of the tyre, including those set out above, are assembled in one or more building stations so as to obtain a so-called "green" tyre, and a subsequent moulding and vulcanizing step, where the green tyre is subjected, for a predetermined time period, to temperature and pressure values so as to vulcanize the elastomer material of the components thereof, obtaining the final structural stability of the tyre.

The building of the tyre provides for a forming drum to be moved between successive building stations, wherein respective components of the tyre are deposited in succession on the external surface thereof.

If the component of the tyre is constituted by an elongated element, supplied to the forming drum in a specific tyre building station, that elongated element is typically stored in continuous form in suitable reels, in which it is collected downstream of a production station of the elongated element itself and from which the elongated element is unwound upstream of the building station.

Some elongated elements are produced from a plurality of wires or cords which are unwound from a creel and directed in a parallel manner through a head of an extruder, where they are embedded in a layer of elastomer material. The semifinished products being released from the head of the extruder, advantageously tautened at a desired tension, are therefore separated into a predefined number of elongated elements, which are independently directed to respective storage stations where they are wound on respective reels.

For some types of elongated element, for example, those which are engaged in the building of tyres with high performance levels, the elastomer material which covers the wires or cords has a specific composition which does not allow the elongated element to be wound in a reel without incurring undesirable phenomena of mutual adhesion, between superimposed turns.

In those cases, there is provision for the elongated element to be coupled to a service film before being wound on the reel. That service film is interposed between the superimposed turns of the elongated element and can be constructed from any material which is suitable for preventing the adhesion with the elastomer material, for example, from polyethylene, and can be formed into any suitable form, for example, in the form of a tape.

However, this involves the use of dedicated service reels both during the step of collecting the elongated element from the production station and during the step of supplying the elongated element to the building station.

In the first case, in fact, there is provision for the service film to be unwound from a service reel while, in the second case, there is provision for the service film, once it has been separated from the elongated element, to be collected again on one of those reels in order to be re-used subsequently.

US 4170504 describes a reel with a high capacity for collecting an elongated element which is coupled to a service film, and which members are wound in successive alternating helical layers on the reel.

WO 2011/073795 in the name of the same Applicant describes a method for controlling the winding of an elongated element on a collection reel with the interposition of a service film, wherein the rotation speed of the collection reel is adjusted in accordance with the actual winding diameter detected and the variation of length of the elongated element portion in the process of being deposited on the collection reel.

The Applicant observes that, in the plants of the type described in US 4170504 and WO 2011/073795, the elongated element being released from a production station is directed towards a first reel and, before being wound thereon, is coupled to a service film which is unwound from a second reel, which is dedicated and which is subordinate to the first reel. Furthermore, the Applicant observes that, in the plants of the type described in US 4170504 and WO 2011/073795, the second reel can be used only for unwinding the service film and, if the elongated element dispensed from the production station does not require any service film, remains inactive.

WO 2012/085776 and US 2007/068617 disclose respective plants for collecting or dispensing an elongated element on reels according to the prior art.

The term "elongated element" is intended to be understood to be an element having a longitudinal dimension which is prevalent with respect to the remaining dimensions. Preferably, the elongated element is formed in a strip-like manner with a flattened cross-section.

In a preferred form, the elongated element is a component of a tyre structure and comprises elastomer material in which there are embedded additional structural elements such as, preferably, one or more fabric or metal reinforcement cords. Those reinforcement cords are preferably arranged parallel with each other and preferably extend in the longitudinal direction of the same elongated element.

The Applicant has observed that the control of the steps of winding in reels and the subsequent unwinding therefrom of elongated elements which require coupling to a service film may be the cause of substantial complications both in terms of plant arrangement and in terms of production.

The Applicant has in fact noticed that the requirement for elongated elements which require coupling to a service film is of a sporadic nature so that the collection thereof often has to be controlled in the same plants which also produce and collect elongated elements which do not require coupling to the service film.

However, the Applicant has verified that the plants which are dimensioned so as to collect elongated elements which do not require coupling to the service film, are arranged in order to associate with the production station one or more storage stations for a single reel and are poorly suitable for being used with storage stations which also provide, for each storage reel, a correspondent reel for the service film.

The Applicant has observed that it is possible to modify the plants for collecting the elongated elements so as to provide for areas which are for collecting elongated elements by means of a single reel and which are separate from additional areas for collecting elongated elements by means of a storage reel which is combined with a reel for the service film, those areas alternately being used in accordance with the type of elongated element to be collected.

However, the Applicant has observed that this solution involves a relevant impact both in purely economic terms, owing to the need for provision of new components, and in terms of the plant configuration (layout) because it needs a large surface-area dedicated to the plant.

Similarly, the Applicant has observed that the plants for dispensing an elongated element for building a tyre provide for each building station, in accordance with the specific elongated element supplied to the forming drum, to be associated with a storage station which is specifically configured to supply elongated elements by means of a single storage reel or by means of a storage reel which is combined with a service reel.

On the basis of those observations, the Applicant has perceived that the operating flexibility of the plants for collecting or for dispensing elongated elements could be increased by modifying the storage stations so as to allow the operability both with elongated elements which require coupling with respect to a service film and with elongated elements which do not require such a coupling.

Therefore, the Applicant has found that a storage device which is provided with a pair of reel supports which can be moved independently and further comprising an auxiliary storage unit which is interposed between the supports, makes it possible both to use two reels in an independent manner so as to use each reel for a respective elongated element without involving the auxiliary storage unit, and to use the two mutually combined reels by means of the auxiliary storage unit so as to use one reel for the elongated element and the other reel for the service film.

In particular, in a first aspect thereof, the invention relates to a plant for collecting or dispensing an elongated element for building tyres, in accordance with claim 10.

The Applicant has verified that, as a result of this configuration of the storage station, both the collecting plants of the elongated elements and the dispensing plants therefor are more flexible with respect to the conventional plants described above with reference to the prior art. In particular, that new configuration allows a changeover more readily from processing which involves an elongated element which is coupling to a service film to processing which involves an elongated element which does not have a service film, without modifying the processing station of the elongated element positioned upstream of the storage station or the building station of the tyre positioned downstream of the storage station.

In a second aspect thereof, the invention relates to a method for collecting in reels at least one elongated element for building a tyre, in accordance with claim 1.

In a third aspect thereof, the invention relates to a method for dispensing an elongated element which is wound in reels in a tyre building station, in accordance with claim 5.

As a result of the characteristics of the methods set out above, the Applicant deems that it is possible to control the collection or dispensing of elongated elements which are coupled to a service film or which are not coupled to a service film while maintaining a maximum of production efficiency of the plant, both during the production step of the elongated element and during the tyre building step, by optimizing the area of plant available for each type of elongated element.

The Applicant has further verified that the control of the change in production from one type of elongated element to the other is facilitated and speeded up.

The present invention in at least one of the above-mentioned aspects may have at least one of the preferred features set out below.

In a preferred embodiment, said first support and said second support are arranged in such a manner that said first reel and said second reel are in a state beside each other and with the respective rotation axes parallel with each other.

In a greatly preferred manner, said first support and said second support are arranged in such a manner that said first reel and said second reel are coaxial with each other.

In this manner, the two reels are arranged in the most suitable position for collecting from one production station two elongated elements in an independent manner. That configuration is further suitable for current production stations which provide for a central distribution arrangement for the elongated elements, at the sides of which the storage stations are arranged so that the new solutions proposed by the present invention can also be implemented in the conventional collection plants without requiring substantial modifications to the production station.

Preferably, said first drive member is provided to be connected to said first reel at the side opposite said second reel.

Preferably, said second drive member is provided to be connected to said second reel at the side opposite said first reel.

Preferably, said first storage unit is positioned with respect to said first reel at the opposite side with respect to said second reel.

Preferably, said second storage unit is positioned with respect to said second reel at the opposite side with respect to said first reel.

Each of the features set out above contributes individually and as a whole to the provision of the storage station for collecting or dispensing an elongated element which is coupled to a service film. In fact, that arrangement of the components of the storage station allows the space between the two reels to be kept relatively free so as not to obstruct the passage between the reels of the service film and not to obstruct the work of the operator who, in the event of a production change, is called upon to guide the service film between one reel and the other.

In a preferred embodiment, said first storage unit comprises a plurality of guide rollers, about which said elongated element is guided, said guide rollers being arranged in a vertical plane which is substantially perpendicular to said rotation axis of said first reel.

In a similarly preferred embodiment, said second storage unit comprises a plurality of guide rollers, about which said additional elongated element is guided, said guide rollers being arranged in a vertical plane which is substantially perpendicular to said rotation axis of said second reel.

As a result of this feature, the spatial requirement of the storage station is contained in the direction defined by the axes of the two reels, so as to allow greater overall compactness of the plants both during the collection step and during the dispensing step of the elongated element.

Preferably, said guide rollers are aligned in parallel rows which are movable with respect to one another in said vertical plane.

Preferably, said auxiliary storage unit comprises a plurality of rollers, about which said service film is guided, said rollers being arranged in a vertical plane which is substantially parallel with said rotation axis of said first reel.

In this manner, the passage of the service film between one reel and the other is linear and smooth-running.

Preferably, said auxiliary storage unit is positioned between said first reel and said second reel.

In this manner, the auxiliary storage unit is positioned on the path of the service film, promoting the action of the operator in the event of a production change.

Preferably, there is associated with at least one from said first support and said second support a coiling member which is provided to distribute said elongated element or said service film on said first reel or said second reel.

In a greatly preferred manner, at least one coiling member can be blocked in an axially external position with respect to said first reel or said second reel, respectively.

In this manner, any coiling member present may be moved into a position which does not interfere with the unwinding of the elongated element or the service film.

In a preferred embodiment, when said at least one elongated element does not have to be coupled to a service film, two of said elongated elements are wound on said first reel and, respectively, on said second reel, independently of each other.

In this manner, the collection plant operates at the maximum extent of its efficiency because both the reels of the storage station can be used for the collection of the elongated element.

Preferably, when said at least one elongated element does not have to be coupled to a service film before being wound on a reel, said auxiliary storage unit remains inactive.

In this manner, during the step in which the elongated element is collected by a production station, the first reel and the second reel operate in a totally independent manner, each reel being supplied by a respective storage unit separate from the auxiliary storage unit.

Preferably, when said at least one elongated element has to be coupled to a service film and said second reel is empty, said elongated element is coupled to the service film, which is collected on said auxiliary storage unit, and is wound continuously on said first reel while said second reel is replaced.

The provision of the auxiliary storage unit allows continuous collection of the elongated element on the first reel even when the service film present on the second reel is at an end. In fact, in that event it is possible to replace the empty reel on the first support with another reel on which the service film is wound while the elongated element can continue to be coupled to the service film which is present on the auxiliary storage unit, until the end of the operation for replacing the second reel.

Furthermore, during the collection step, the provision of the auxiliary storage unit allows control of the tension on the service film.

In a preferred embodiment, when said elongated element is not coupled to a service film, said second reel is kept waiting while said elongated element is unwound from said first reel.

Preferably, when said elongated element is not coupled to a service film, said elongated element is unwound from said first reel until said first reel is emptied.

In this manner, during the step in which an elongated element is dispensed to a building station, the second reel can be provided on the second support thereof and coupled to its own drive member so as to allow the immediate dispensing of an elongated element at the time at which the elongated element which is wound on the first reel finishes without interrupting the dispensing at the building station. In particular, at the time at which the first reel is emptied, the terminal end of the element wound thereon is joined to the start end of the elongated element which is wound on the second reel, which, having already been prepared beforehand, can immediately start the dispensing of the elongated element.

Preferably, when said elongated element to be dispensed in said building station is not coupled to a service film, said auxiliary storage unit remains inactive.

The features and advantages of the invention will be clearer from the detailed description of a preferred embodiment thereof, which is illustrated by way of non-limiting example with reference to the appended drawings, in which:
- Figure 1 is a schematic plan view of a plant for collecting an elongated element for building tyres realized according to the present invention in a first operating configuration;
- Figure 2 is a schematic plan view of the plant of Figure 1 in a second operating configuration;
- Figure 3 is a schematic plan view of a plant for dispensing an elongated element for building tyres which is constructed according to the present invention;
- Figure 4 is a schematic front view of a storage device of the plant for collecting an elongated element illustrated in Figures 1 and 2;
- Figure 5 is a schematic view of the storage device of Figure 4 in the operating configuration of the plant of Figure 1;
- Figure 6 is a schematic view of the storage device of Figure 4 in the operating configuration of the plant of Figure 2;
- Figure 7 is a schematic view of the storage device of Figure 4 in a first operating configuration of the plant of Figure 3;
- Figure 8 is a schematic view of the storage device of Figure 4 in a second operating configuration of the plant of Figure 3.

With reference to the appended Figures, a plant for collecting and a plant for dispensing an elongated element 2 for building a tyre are designated 1 and 1', respectively, and are constructed according to the present invention.

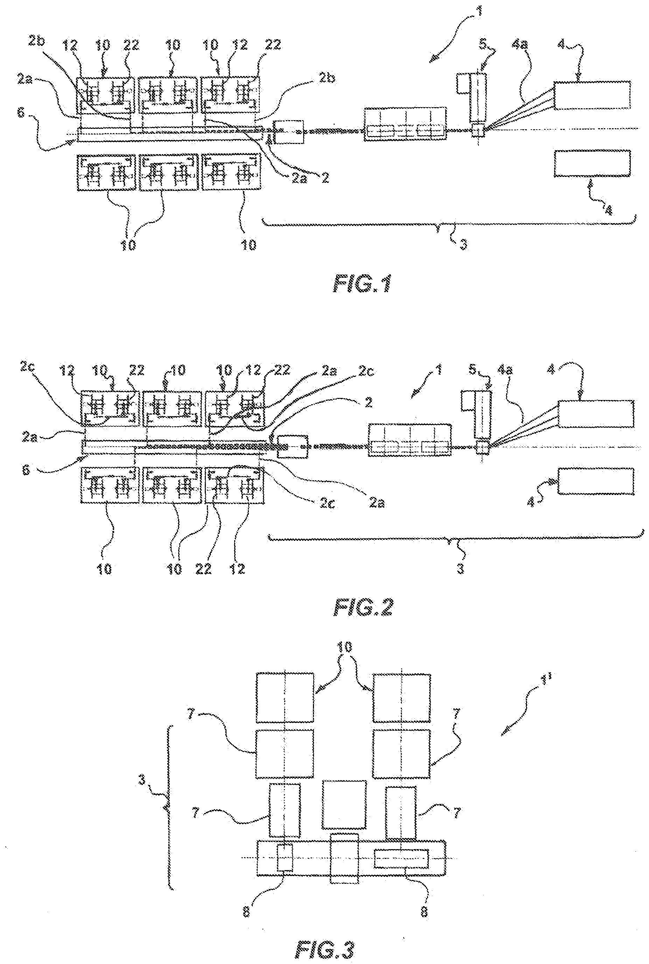

In particular, Figures 1 and 2 generally illustrate a plant 1 for collecting an elongated element 2, while Figure 3 generally illustrates a plant 1' for dispensing an elongated element 2.

Both the plants 1 and 1' comprise a processing station of the elongated element 2 with which at least one storage station 10 thereof is associated.

The plants 1 and 1' differ from each other owing to the type of processing station which, in the plant 1, is a production station 3 of the elongated element 2 while, in the plant 1', it is a building station 3' of a tyre. The plants 1 and 1' further differ from each other for the direction of advance of the elongated element 2 which, in the plant 1, is moved by the production station 3 to the storage station 10 while, in the plant 1', it is moved from the storage station 10 to the building station 3'.

However, the storage station 10 is substantially similar in the two plants 1 and 1' .

In particular, the production station 3 of the plant 1 comprises a creel 4, from which a plurality of wires or cords 4a are unwound and are in turn directed through the head of an extruder 5 which provides for them to be covered with an elastomer mixture of a suitable composition.

The semifinished component being released from the extruder 5 is then subdivided into a suitable number of elongated elements 2 which are continuous and which are directed along a central distribution arrangement 6 and from that location to the storage stations 10 which are arranged symmetrically at the sides of the central distribution arrangement 6, downstream of the production station 3.

In the preferred embodiment described here, the elongated element 2 is a continuous strip of rubber fabric which is provided with reinforcement cords for forming a component of the tyre being processed.

However, the building station 3' of the plant 1' comprises a feeding device 7 which takes the elongated element 2 from the storage station 10, positioned upstream of the building station 3', and deposits it on the radially external surface of a forming drum 8, which is moved between successive building stations.

The storage station 10 comprises a first support 11 for a first reel 12 which is provided to receive so as to wind thereon an elongated element 2a, and a second support 21 for a second reel 22 which is provided to receive so as to wind thereon another elongated element 2b or a service film 2c.

There is associated with the first support 11 a first drive member 13 which is provided to rotate the first reel 12 about a rotation axis X thereof so as to wind or unwind the elongated element 2a on the first reel 12.

There is further associated with the first support 11 a first storage unit 14 which is provided between the first coil 12 and the processing station 3, 3' in order to collect a predetermined length of the elongated element 2a in transit.

Similarly, there is associated with the second support 21 a second drive member 23 which can be actuated independently of the first drive member 13 and which is provided to rotate the second reel 22 about a rotation axis X' thereof, so as to wind or unwind the additional elongated element 2b or the service film 2c on the second reel 22.

There is further associated with the second support 21 a second storage unit 24 which is provided between the second reel 22 and the processing station 3, 3' in order to collect a predetermined length of the additional elongated element 2b in transit.

The first support 11 and the second support 21 are arranged in such a manner that the first reel 12 and the second reel 22 are beside each other, with the respective rotation axes X, X' substantially parallel.

The first drive member 13 and the second drive member 23 are positioned laterally relative to the first reel 12 and second reel 22, respectively, in the region of the respective hubs, advantageously at the opposite side to the second reel 22 and the first reel 12, respectively, in such a manner that no drive member 13 or 23 is interposed between the reels 12 and 22.

In the same manner, the first and second storage units 14 and 24 are also arranged laterally relative to the first reel 12 and second reel 22, respectively, at the opposite side to the second reel 22 and the first reel 12, respectively.

The first storage unit 14 and the second storage unit 24 comprise respective pluralities of guide rollers 15 and 25, about which the elongated element 2a and the additional elongated element 2b are guided.

The guide rollers 15 and in a generally similar manner the guide rollers 25 can be rotated about respective mutually parallel rotation axes which are provided in respective vertical planes which are mutually parallel and perpendicular to the axes X and X'.

The guide rollers 15 and 25 are arranged in parallel rows which can be moved along the vertical plane towards and away from each other so as to increase or decrease the length, and therefore the quantity, of the elongated element 2a or 2b wound thereon.

There is positioned between the first reel 12 and the second reel 22 an auxiliary storage unit 30 which is separate from the first and second storage units 14 and 24, and which is provided to allow the passage of the service film 2c between the first reel 12 and the second reel 22.

Similarly to the first and second storage units 14 and 24, the auxiliary storage unit 30 comprises a plurality of rollers 31, which have parallel rotation axes and which are arranged in a vertical plane which is substantially parallel with the rotation axes X and X'.

There can be associated with the first reel 12 and the second reel 22 a first coiling member 16 and a second coiling member 26, respectively, which are provided to distribute, when necessary, the elongated element 2a on the first reel 12 and the additional elongated element 2b or the service film 2c on the second reel 22, respectively.

Each coiling member 16, 26 comprises an arm 17, 27 which is mounted at an end thereof on a support 18, 28 which extends in the region of the respective reel 12, 22 parallel with the rotation axes X, X', which is preferably pivotable about the support 18, 28 so as to vary the spacing thereof from the first or second reels 12, 22.

Furthermore, if there is provision for the first reel 12 or the second reel 22 to dispense an elongated element 2a, 2b or a service film 2c, the arm 17 or 27 corresponding thereto can be blocked in a position of the support 18, 28 which is axially external with respect to the reel 12, 22. In this manner, the coiling member 16 or 26 does not interfere with any passage of the elongated elements 2a, 2b or the service film 2c during the unwinding steps from the respective reel 12, 22.

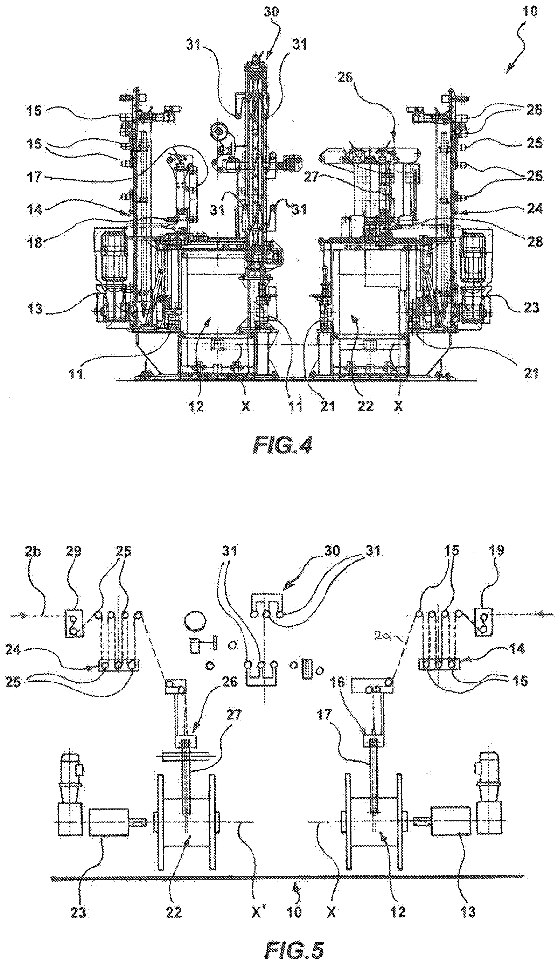

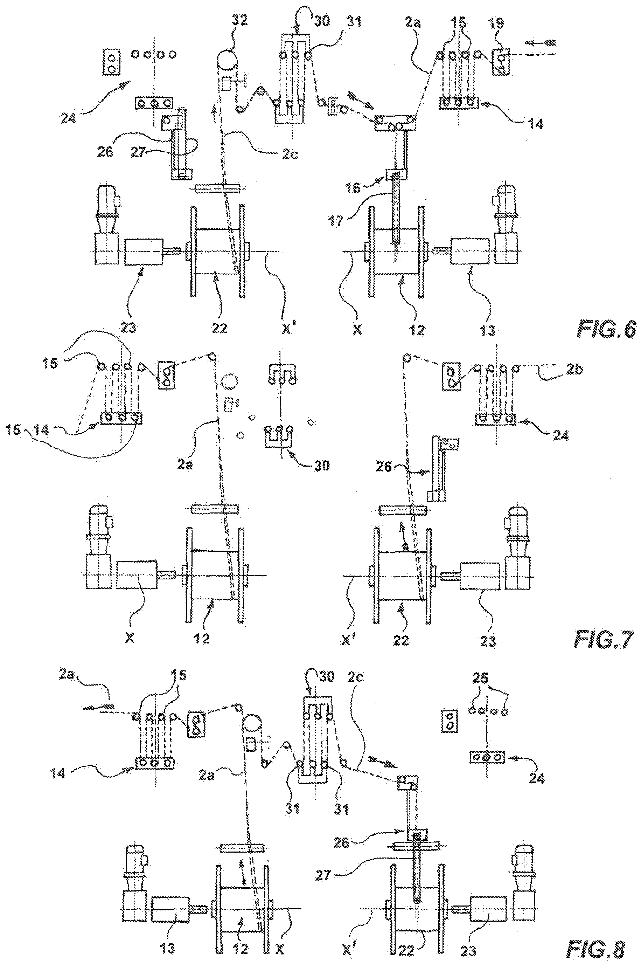

With reference to Figures 5 and 6, there are set out below the operating methods of the plant 1 for collecting the elongated element which is produced by the production station 3 in the region of the storage station 10.

The storage station 10 may be arranged in two different configurations, in accordance with the type of elongated element produced by the production station 3.

If the elongated element produced by the production station 3 does not require coupling to a service film before being wound on a reel, the plant 1 takes up the configuration illustrated in Figure 1, with some storage devices 10 directly supplied by the production station 3 and others in waiting.

Each storage station 10 supplied by the production station 3 is configured as illustrated in Figure 5, with an elongated element 2a being released from the production station 3 and wound on the first reel 12 and an additional elongated element 2b which is also released from the production station 3 and identical to the elongated element 2a which is wound on the second reel 22.

The elongated element 2a being released from the production station 3 is directed by means of a traction unit 19 around the rollers 15 of the first storage unit 14 and to the coiling member 16 which, by means of the arm 17, provides for depositing the elongated element 2a on the external surface of the first reel 12.

Preferably, during this collection step of the elongated element, the arm 17 is moved alternately along the support 18 so as to deposit the elongated element 2a in a uniform manner on the entire axial dimension of the first reel 12.

In a generally similar manner, the additional elongated element 2b being released from the production station 3 is directed by means of a traction group 29 around the rollers 25 of the second storage unit 24 and to the coiling member 26, which, by means of the arm 27, provides for depositing the additional elongated element 2b in a uniform manner on the external surface of the second reel 22.

The first reel 12 and the second reel 22 are connected to the first drive member 13 and second drive member 23, respectively, in order to be rotated about the respective axes X and X' at the appropriate speed.

In this first configuration, the auxiliary storage unit 30 remains inactive and the elongated elements 2a and 2b are wound on the first reel 12 and on the second reel 22 in a manner independent of each other, respectively.

If the elongated element produced by the production station 3 requires coupling to a service film before being wound on a reel, the plant 1 takes up the configuration illustrated in Figure 2, with the possibility of directly supplying all the storage devices 10 by means of the production station 3 in which an elongated element is distributed in each storage station 10.

In this case, each storage station 10 is configured as illustrated in Figure 6, with the service film 2c unwound from the second reel 22 and with the elongated element 2a produced by the production station 3 wound on the first reel 12.

The service film 2c is unwound from the second reel 22 and, by means of some guide rollers 32, is guided on the rollers 31 of the auxiliary storage unit 30 towards the first reel 12.

The elongated element 2a being released from the production station 3 is directed by means of the traction group 19 around the rollers 15 of the first storage unit 14 towards the first reel 12.

Before arriving at the first reel 12, the elongated element 2a and the service film 2c are coupled to each other and therefore directed together to the coiling member 26, which, by means of the arm 27, provides for depositing the elongated element 2a which is coupled to the service film 2c in a uniform manner on the external surface of the first reel 12.

The second coiling member 26 is maintained, in this configuration, blocked in an axially external position with respect to the second reel 22.

The provision of the auxiliary storage unit 30 allows control of the tension on the service film 2c.

With reference to Figures 7 and 8, there are set out below the operating methods of the plant 1' for dispensing an elongated element to a tyre building station 3'.

Also in this case, the storage station 10 can be arranged in two different configurations, in accordance with the type of elongated element wound in a reel which has to be dispensed to the building station 3'.

In the version illustrated in Figures 7 and 8, there is provision for the service film 2c to be collected only by the second reel 22 so that it is necessary to provide only the assembly of the coiling member 26, saving the first coiling member 16.

Naturally, it is possible to provide for both the reels to be able to collect the service film 2c, in which case both the coiling members 16 and 26 are provided.

If the elongated element wound in the reels is not coupled to a service film, the storage station 10 is configured as illustrated in Figure 7, with an elongated element 2a wound on the first reel 12 and an additional elongated element 2b which is identical to the elongated element 2a wound on the second reel 22, both being arranged in order to supply the building station 3'.

In this configuration, the auxiliary storage unit 30 is inactive and the coiling member 16 is blocked in an axially external position with respect to the second reel 22.

The elongated elements 2a and 2b are dispensed to the building station 3' one at a time, in an alternating manner. For example, while the elongated element 2a is supplied to the building station 3' by passing through the first storage unit 14, the additional elongated element 2b which is suitably guided by means of the rollers 25 of the second storage unit 24, is held in place, in a waiting position.

When the first reel 12 becomes empty, the start end of the additional elongated element 2b is joined to the terminal end of the elongated element 2a and the second reel 22 is caused to rotate by the second drive member 23 in order to unwind the additional elongated element 2b and to supply it to the building station 3'.

While the additional elongated element 2b is being dispensed, the first reel 12, in the empty state, is replaced with a subsequent reel, which is full and which is arranged on the first support 11, in a state connected to the first drive member 13 and after directing the elongated element through the first storage unit 14, placed in a waiting state (see Figure 7).

If the elongated element to be supplied to the processing station 3 is coupled to a service film, the storage station 10 is configured as illustrated in Figure 8, with the elongated element 2a unwound from the first reel 12 in order to be supplied to the building station 3' and the service film 2c being wound on the second reel 22.

The elongated element 2a is unwound from the first reel 12 in a coupled condition with respect to the service film 2c, and, after being separated therefrom, is directed through the first storage unit 14 and then dispensed to the building station 3'.

The service film 2c, once it has been separated from the elongated element 2a, is guided on the rollers 31 of the auxiliary storage unit 30 towards the second reel 22 where, by means of the second coiling member 26, it is deposited in a uniform manner on the external surface thereof.

The second reel 22 is initially empty and is gradually filled with the service film 2c which is separated from the elongated element 2a.

The provision of the auxiliary storage unit 30 allows control of the tension on the service film 2c.

With reference to Figures 5 to 8, it may be noted that the first and second storage units 14 and 24 are illustrated in a vertical plane parallel with the rotation axes X and X', instead of being perpendicular, only for the sake of greater clarity of the illustration of the process.

Naturally, a person skilled in the art could apply additional modifications and variants to the invention described above for the purpose of complying with specific and contingent application requirements, variants and modifications in any case being included within the scope of protection as defined by the appended claims.

## Claims

1. Method for collecting in reels at least one elongated element for building a tyre, comprising:
- associating, with a production station (3) of said at least one elongated element (2a, 2b), at least one storage station (10) for said at least one elongated element (2a, 2b) including a first support (11) for a first reel (12) and a second support (21) for a second reel (22) which can be independently caused to rotate about respective rotation axes (X; X'),
- evaluating whether said at least one elongated element has to be coupled to a service film before being wound on a reel, wherein:
- if said at least one elongated element does not have to be coupled to a service film before being wound on a reel, winding two of said elongated elements (2a, 2b) on said first reel (12) and on said second reel (22), respectively;
- if said at least one elongated element has to be coupled to a service film before being wound on a reel:
a) providing on said second support a second reel (22) on which said service film (2c) is wound,
b) guiding said service film (2c) through an auxiliary storage unit (30) which is provided on said storage station,
c) coupling said service film (2c) to said elongated element (2a),
d) winding said elongated element coupled to said service film on said first reel (12) which is positioned on said first support (11).

2. Method according to claim 1, wherein, when said at least one elongated element does not have to be coupled to a service film, two of said elongated elements are wound on said first reel (12) and, respectively, on said second reel (22), independently of each other.

3. Method according to claim 1 or 2, wherein, when said at least one elongated element does not have to be coupled to a service film before being wound on a reel, said auxiliary storage unit (30) remains inactive.

4. Method according to claim 1, wherein, when said at least one elongated element has to be coupled to a service film and said second reel (22) is empty, said elongated element (2a) is coupled to the service film, which is collected on said auxiliary storage unit (30), and is wound continuously on said first reel (12) while said second reel is replaced.

5. Method for dispensing an elongated element which is wound in reels in a tyre building station (3'), comprising:
- associating, with said building station, at least one storage station (10) including a first support (11) for a first reel (12) and a second support (21) for a second reel (22) which can be independently caused to rotate about respective rotation axes (X; X'),
- verifying whether said elongated element stored in said reels is coupled to a service film, wherein:
- if said elongated element is not coupled to a service film:
a) providing a first reel (12), on which there is wound said elongated element (2a), on said first support (11), and a second reel (22), on which there is wound an additional elongated element (2b), on said second support (21),
b) unwinding said elongated element (2a) from said first reel (12) in order to dispense said elongated element in said building station (3') and, successively,
c) unwinding said additional elongated element (2b) from said second reel (22) in order to dispense said additional elongated element in said building station (3');
- if said elongated element is coupled to a service film:
a) providing a first reel (12), on which there is wound said elongated element which is coupled to said service film on said first support and an empty second reel (22) on said second support,
b) unwinding said elongated element (2a), which is coupled to said service film, from said first reel (12),
c) separating said service film (2c) from said elongated element (2a) and dispensing said elongated element (2a) to said building station (3'),
d) guiding said service film (2c) through an auxiliary storage unit (30) which is provided on said storage device and
e) winding said service film on said second reel (22).

6. Method according to claim 5, wherein, when said elongated element is not coupled to a service film, said second reel (22) is kept waiting while said elongated element is unwound from said first reel (12).

7. Method according to claim 6, wherein, when said elongated element is not coupled to a service film, said elongated element is unwound from said first reel until said first reel is emptied.

8. Method according to any one of claims 5 to 7, wherein, when said elongated element to be dispensed in said building station is not coupled to a service film, said auxiliary storage unit (30) remains inactive.

9. Method according to any one of claims 1 to 8, wherein said auxiliary storage unit (30) is positioned between said first reel (12) and said second reel (22).

10. Plant (1, 1') for collecting or dispensing an elongated element (2a, 2b) for building tyres and arranged to operate according to the method of any one of claims 1 to 4 or according to the method of any one of the claims 5 to 9, the plant comprising at least one storage station (10) for said elongated element in order to collect said elongated element or to dispense said elongated element, said at least one storage station (10) comprising:
- a first support (11) for a first reel (12) which is provided to receive an elongated element (2a),
- a first drive member (13) which is associated with said first support in order to rotate said first reel (12) about a rotation axis (X) thereof in order to wind said elongated element (2a) on said first reel or, alternatively, to unwind said elongated element (2a) from said first reel,
- a first storage unit (14) for said elongated element (2a), which unit is associated with said first support,
- a second support (21) for a second reel (22) which is provided to receive an additional elongated element (2b) or a service film (2c),
- a second drive member (23) which is associated with said second support in order to rotate said second reel (22) about a rotation axis (X') thereof in order to wind said additional elongated element (2b) or said service film (2c) on said second reel or, alternatively, to unwind said additional elongated element (2b) or said service film (2c) from said second reel,
- a second storage unit (24) for said additional elongated element (2b), which unit is associated with said second support,
wherein there is associated with said first support and said second support an auxiliary storage unit (30) which is arranged in order to allow the passage of said service film (2c) between said first reel (12) and second reel (22).

11. Plant according to claim 10, wherein said first storage unit (14) is positioned with respect to said first reel (12) at the opposite side with respect to said second reel (22), and said second storage unit (24) is positioned with respect to said second reel (22) at the opposite side with respect to said first reel (12).

12. Plant according to claim 10 or 11, wherein said first storage unit (14) comprises a plurality of guide rollers (15), about which said elongated element (2a) is guided, said guide rollers being arranged in a vertical plane which is substantially perpendicular to said rotation axis (X) of said first reel (12), and said second storage unit (24) comprises a plurality of guide rollers (25), about which said additional elongated element (2b) is guided, said guide rollers being arranged in a vertical plane which is substantially perpendicular to said rotation axis (X') of said second reel (22).

13. Plant according to any one of claims 10 to 12, wherein said auxiliary storage unit (30) comprises a plurality of rollers (31), about which said service film (2c) is guided, said rollers being arranged in a vertical plane which is substantially parallel with said rotation axis (X) of said first reel.

14. Plant according to any one of claims 10 to 13, wherein said auxiliary storage unit (30) is positioned between said first reel (12) and said second reel (22).

15. Plant according to any one of claims 10 to 14, wherein there is associated with at least one from said first support (11) and said second support (21) a coiling member (16, 26) which is provided to distribute said elongated element (2a, 2b) or said service film (2c) on said first reel (12) or said second reel (22), and said at least one coiling member (16, 26) can be blocked in an axially external position with respect to said first reel (12) or said second reel (22), respectively.

## Patentansprüche

1. Verfahren zum Sammeln zumindest eines länglichen Elements, das zur Fertigung eines Reifens dient, auf Rollen, umfassend:
- Zuordnen zumindest einer Speicherstation (10) für das zumindest eine längliche Element (2a, 2b), die einen ersten Träger (11) für eine erste Rolle (12) und einen zweiten Träger (21) für eine zweite Rolle (22) umfasst, die unabhängig voneinander zur Drehung um jeweilige Drehachsen (X; X') veranlasst werden können, zu einer Herstellungsstation (3) für das zumindest eine längliche Element (2a, 2b),
- Überprüfen, ob das zumindest eine längliche Element mit einer Arbeitsfolie gekoppelt werden muss, bevor es auf eine Rolle aufgewickelt wird,
wobei:
- wenn das zumindest eine längliche Element nicht mit einer Arbeitsfolie gekoppelt werden muss, bevor es auf eine Rolle aufgewickelt wird, zwei der länglichen Elemente (2a, 2b) jeweils auf die erste Rolle (12) und die zweite Rolle (22) aufgewickelt werden;
- wenn das zumindest eine längliche Element mit einer Arbeitsfolie gekoppelt werden muss, bevor es auf eine Rolle aufgewickelt wird:
a) eine zweite Rolle (22) an dem zweiten Träger bereitgestellt wird, auf welche die Arbeitsfolie (2c) aufgewickelt ist,
b) die Arbeitsfolie (2c) durch eine Behelfsspeichereinheit (30), die an der Speicherstation vorgesehen ist, geführt wird,
c) die Arbeitsfolie (2c) mit dem länglichen Element (26) gekoppelt wird,
d) das mit der Arbeitsfolie gekoppelte längliche Element auf die erste Rolle (12), die auf dem ersten Träger (11) positioniert ist, aufgewickelt wird.

2. Verfahren nach Anspruch 1, wobei, wenn das zumindest eine längliche Element nicht mit einer Arbeitsfolie gekoppelt werden muss, zwei der länglichen Elemente jeweils unabhängig voneinander auf die erste Rolle (12) und die zweite Rolle (22) aufgewickelt werden.

3. Verfahren nach Anspruch 1 oder 2, wobei, wenn das zumindest eine längliche Element nicht mit einer Arbeitsfolie gekoppelt werden muss, bevor es auf eine Rolle aufgewickelt wird, die Behelfsspeichereinheit (30) inaktiv bleibt.

4. Verfahren nach Anspruch 1, wobei, wenn das zumindest eine längliche Element mit einer Arbeitsfolie gekoppelt werden muss und die zweite Rolle (22) leer ist, das längliche Element (2a) mit der Arbeitsfolie gekoppelt wird, die auf die Behelfsspeichereinheit (30) aufgewickelt ist, und kontinuierlich auf die erste Rolle (12) aufgewickelt wird, während die zweite Rolle ersetzt wird.

5. Verfahren zum Ausgeben eines länglichen Elements, das auf Rollen aufgewickelt ist, in einer Reifen-Fertigungsstation (3'), umfassend:
Zuordnen zumindest einer Speicherstation (10), die einen ersten Träger (11) für eine erste Rolle (12) und einen zweiten Träger (21) für eine zweite Rolle (22) umfasst, die unabhängig voneinander zur Drehung um jeweilige Drehachsen (X; X') veranlasst werden können, zu der Herstellungsstation,
- Überprüfen, ob das längliche Element, das auf den Rollen gespeichert ist, mit einer Arbeitsfolie gekoppelt ist, wobei:
- wenn das längliche Element nicht mit einer Arbeitsfolie gekoppelt ist:
a) eine erste Rolle (12), auf welcher das längliche Element (2a) aufgewickelt ist, auf dem ersten Träger (11) bereitgestellt wird, und eine zweite Rolle (22), auf welcher ein zusätzliches längliches Element (2b) aufgewickelt ist, an dem zweiten Träger (21) bereitgestellt wird,
b) das längliche Element (2a) von der ersten Rolle (12) abgewickelt wird, um das längliche Element in der Fertigungsstation (3') auszugeben, und, in der Folge,
c) das zusätzliche längliche Element (2b) von der zweiten Rolle (22) abgewickelt wird, um das zusätzliche längliche Element in der Fertigungsstation (3') auszugeben;
- wenn das längliche Element mit einer Arbeitsfolie gekoppelt ist:
a) eine erste Rolle (12), auf welcher das längliche Element, das mit der Arbeitsfolie gekoppelt ist, aufgewickelt ist, auf dem ersten Träger bereitgestellt wird, und eine leere zweite Rolle (22) auf dem zweiten Träger,
b) das längliche Element (2a), das mit der Arbeitsfolie gekoppelt ist, von der ersten Rolle (12) abgewickelt wird,
c) die Arbeitsfolie (2c) von dem länglichen Element (2a) getrennt wird und das längliche Element (2a) an die Fertigungsstation (3') ausgegeben wird,
d) die Arbeitsfolie (2c) durch eine Behelfsspeichereinheit (30) geführt wird, die an der Speicherstation vorgesehen ist, und
e) die Arbeitsfolie auf die zweite Rolle (22) aufgewickelt wird.

6. Verfahren nach Anspruch 5, wobei, wenn das längliche Element nicht mit einer Arbeitsfolie gekoppelt ist, die zweite Rolle (22) auf Warten gehalten wird, während das längliche Element von der ersten Rolle (12) abgewickelt wird.

7. Verfahren nach Anspruch 6, wobei, wenn das längliche Element nicht mit einer Arbeitsfolie gekoppelt ist, das längliche Element von der ersten Rolle abgewickelt wird, bis die erste Rolle geleert ist.

8. Verfahren nach einem der Ansprüche 5 bis 7, wobei, wenn das längliche Element, das in der Fertigungsstation ausgegeben werden soll, nicht mit einer Arbeitsfolie gekoppelt ist, die Behelfsspeichereinheit (30) inaktiv bleibt.

9. Verfahren nach einem der Ansprüche 1 bis 8, wobei die Behelfsspeichereinheit (30) zwischen der ersten Rolle (12) und der zweiten Rolle (22) positioniert ist.

10. Anlage (1, 1') zum Sammeln und Ausgeben eines länglichen Elements (2a, 2b) zur Fertigung von Reifen, die dazu angeordnet ist, gemäß dem Verfahren nach einem der Ansprüche 1 bis 4 oder gemäß dem Verfaren nach einem der Ansprüche 5 bis 9 betrieben zu werden, wobei die Anlage zumindest eine Speicherstation (10) für das längliche Element umfasst, um das längliche Element aufzusammeln oder das längliche Element auszugeben, wobei die zumindest eine Speicherstation (10) umfasst:
- einen ersten Träger (11) für eine erste Rolle (12), die vorgesehen ist, um ein längliches Element (2a) aufzunehmen,
- ein erstes Antriebselement (13), das dem ersten Träger zugeordnet ist, um die erste Rolle (12) um eine Drehachse (X) derselben zu drehen, um das längliche Element (2a) auf die erste Rolle aufzuwickeln, oder alternativ das längliche Element (2a) von der ersten Rolle abzuwickeln,
- eine erste Speichereinheit (14) für das längliche Element (2a), wobei die Einheit dem ersten Träger zugeordnet ist,
- einen zweiten Träger (21) für eine zweite Rolle (22), die vorgesehen ist, um ein zusätzliches längliches Element (2b) oder eine Arbeitsfolie (2c) aufzunehmen,
- ein zweites Antriebselement (23), das dem zweiten Träger zugeordnet ist, um die zweite Rolle (22) um eine Drehachse (X') derselben zu drehen, um das zusätzliche längliche Element (2b) oder die Arbeitsfolie (2c) auf die zweite Rolle aufzuwickeln, oder alternativ das zusätzliche längliche Element (2b) oder die Arbeitsfolie (2c) von der zweiten Rolle abzuwickeln,
- eine zweite Speichereinheit (24) für das zusätzliche längliche Element (2b), wobei die Einheit dem zweiten Träger zugeordnet ist,
wobei eine Behelfsspeichereinheit (30) dem ersten Träger und dem zweiten Träger zugeordnet ist, die angeordnet ist, um den Übergang der Arbeitsfolie (2c) zwischen der ersten Rolle (12) und der zweiten Rolle (22) zu erlauben.

11. Anlage nach Anspruch 10, wobei die erste Speichereinheit (14) in Bezug auf die erste Rolle (12) auf der in Bezug auf die zweite Rolle (22) entgegengesetzten Seite angeordnet ist, und die zweite Speichereinheit (24) in Bezug auf die zweite Rolle (22) auf der in Bezug auf die erste Rolle (12) entgegengesetzten Seite positioniert ist.

12. Anlage nach Anspruch 10 oder 11, wobei die erste Speichereinheit (14) eine Vielzahl von Führungslaufrollen (15) umfasst, um welche das längliche Element (2a) herumgeführt wird, wobei die Führungslaufrollen in einer vertikalen Ebene angeordnet sind, die im Wesentlichen senkrecht auf die Drehachse (X) der ersten Rolle (12) steht, und die zweite Speichereinheit (24) eine Vielzahl von Führungslaufrollen (25) umfasst, um welche das zusätzliche längliche Element (2b) herumgeführt wird, wobei die Führungslaufrollen in einer vertikalen Ebene angeordnet sind, die im Wesentlichen senkrecht auf die Drehachse (X') der ersten Rolle (22) steht.

13. Anlage nach einem der Ansprüche 10 bis 12, wobei die Behelfsspeichereinheit (30) eine Vielzahl von Laufrollen (31) umfasst, um welche die Arbeitsfolie (2c) herumgeführt wird, wobei die Laufrollen in einer vertikalen Ebene angeordnet sind, die im Wesentlichen parallel zu der Drehachse (X) der ersten Rolle ist.

14. Anlage nach einem der Ansprüche 10 bis 13, wobei die Behelfsspeichereinheit (30) zwischen der ersten Rolle (12) und der zweiten Rolle (22) positioniert ist.

15. Anlage nach einem der Ansprüche 10 to 14, wobei zumindest einem von dem ersten Träger (11) und dem zweiten Träger (21) ein Wickelelement (16, 26) zugeordnet ist, das vorgesehen ist, um das längliche Element (2a, 2b) oder die Arbeitsfolie (2c) auf der ersten Rolle (12) oder der zweiten Rolle (22) zu verteilen, und das zumindest eine Wickelelement (16, 26) jeweils in Bezug auf die erste Rolle (12) oder die zweite Rolle (22) in einer axial außenliegenden Position blockiert werden kann.

## Revendications

1. Procédé pour collecter en bobines au moins un élément allongé pour construire un pneu, comprenant le fait :
- d'associer, à un poste de production (3) dudit au moins un élément allongé (2a, 2b), au moins un poste de stockage (10) pour ledit au moins un élément allongé (2a, 2b) comportant un premier support (11) pour une première bobine (12) et un deuxième support (21) pour une deuxième bobine (22) qui peuvent être amenées à tourner indépendamment autour d'axes de rotation respectifs (X ; X'),
- d'évaluer si ledit au moins un élément allongé doit être couplé à un film de service avant d'être enroulé sur une bobine,
dans lequel :
- si ledit au moins un élément allongé ne doit pas être couplé à un film de service avant d'être enroulé sur une bobine, d'enrouler deux desdits éléments allongés (2a, 2b) sur ladite première bobine (12) et sur ladite deuxième bobine (22), respectivement ;
- si ledit au moins un élément allongé doit être couplé à un film de service avant d'être enroulé sur une bobine ;
a) de fournir sur ledit deuxième support une deuxième bobine (22) sur laquelle ledit film de service (2c) est enroulé,
b) de guider ledit film de service (2c) à travers une unité de stockage auxiliaire (30) qui est prévue sur ledit poste de stockage,
c) de coupler ledit film de service (2c) audit élément allongé (2a),
d) d'enrouler ledit élément allongé couplé audit film de service sur ladite première bobine (12) qui est positionnée sur ledit premier support (11).

2. Procédé selon la revendication 1, dans lequel, lorsque ledit au moins un élément allongé ne doit pas être couplé à un film de service, deux desdits éléments allongés sont enroulés sur ladite première bobine (12) et, respectivement, sur ladite deuxième bobine (22), indépendamment l'un de l'autre.

3. Procédé selon la revendication 1 ou 2, dans lequel, lorsque ledit au moins un élément allongé ne doit pas être couplé à un film de service avant d'être enroulé sur une bobine, ladite unité de stockage auxiliaire (30) reste inactive.

4. Procédé selon la revendication 1, dans lequel, lorsque ledit au moins un élément allongé doit être couplé à un film de service et ladite deuxième bobine (22) est vide, ledit élément allongé (2a) est couplé au film de service, qui est collecté sur ladite unité de stockage auxiliaire (30), et est enroulé en continu sur ladite première bobine (12) pendant que ladite deuxième bobine est remplacée.

5. Procédé pour distribuer un élément allongé qui est enroulé en bobines dans un poste de construction de pneus (3'), comprenant le fait :
- d'associer, audit poste de construction, au moins un poste de stockage (10) comportant un premier support (11) pour une première bobine (12) et un deuxième support (21) pour une deuxième bobine (22) qui peuvent être amenées à tourner indépendamment autour d'axes de rotation respectifs (X ; x'),
- à vérifier si ledit élément allongé stocké dans lesdites bobines est couplé à un film de service, dans lequel :
- si ledit élément allongé n'est pas couplé à un film de service :
a) de fournir une première bobine (12), sur laquelle est enroulé ledit élément allongé (2a), sur ledit premier support (11), et une deuxième bobine (22), sur laquelle est enroulé un élément allongé supplémentaire (2b), sur ledit deuxième support (21),
b) de dérouler ledit élément allongé (2a) de ladite première bobine (12) afin de distribuer ledit élément allongé dans ledit poste de construction (3') et, successivement,
c) de dérouler ledit élément allongé supplémentaire (2b) de ladite deuxième bobine (22) afin de distribuer ledit élément allongé supplémentaire dans ledit poste de construction (3') ;
- si ledit élément allongé est couplé à un film de service :
a) de fournir une première bobine (12), sur laquelle est enroulé ledit élément allongé qui est couplé audit film de service sur ledit premier support et une deuxième bobine vide (22) sur ledit deuxième support,
b) de dérouler ledit élément allongé (2a), qui est couplé audit film de service, de ladite première bobine (12),
c) de séparer ledit film de service (2c) dudit élément allongé (2a) et de distribuer ledit élément allongé (2a) audit poste de construction (3'),
d) de guider ledit film de service (2c) à travers une unité de stockage auxiliaire (30) qui est prévue sur ledit dispositif de stockage et
e) d'enrouler ledit film de service sur ladite deuxième bobine (22).

6. Procédé selon la revendication 5, dans lequel, lorsque ledit élément allongé n'est pas couplé à un film de service, ladite deuxième bobine (22) est mise en attente pendant que ledit élément allongé est déroulé de ladite première bobine (12).

7. Procédé selon la revendication 6, dans lequel, lorsque ledit élément allongé n'est pas couplé à un film de service, ledit élément allongé est déroulé de ladite première bobine jusqu'à ce que ladite première bobine soit vidée.

8. Procédé selon l'une quelconque des revendications 5 à 7, dans lequel, lorsque ledit élément allongé devant être distribué dans ledit poste de construction n'est pas couplé à un film de service, ladite unité de stockage auxiliaire (30) reste inactive.

9. Procédé selon l'une quelconque des revendications 1 à 8, dans lequel ladite unité de stockage auxiliaire (30) est positionnée entre ladite première bobine (12) et ladite deuxième bobine (22).

10. Installation (1, 1') pour collecter ou distribuer un élément allongé (2a, 2b) pour construire des pneus et agencée pour fonctionner selon le procédé de l'une quelconque des revendications 1 à 4 ou selon le procédé de l'une quelconque des revendications 5 à 9, l'installation comprenant au moins un poste de stockage (10) pour ledit élément allongé afin de collecter ledit élément allongé ou de distribuer ledit élément allongé, ledit au moins un poste de stockage (10) comprenant :
- un premier support (11) pour une première bobine (12) qui est prévu pour recevoir un élément allongé (2a),
- un premier élément d'entraînement (13) qui est associé audit premier support afin de faire tourner ladite première bobine (12) autour d'un axe de rotation (X) de celle-ci afin d'enrouler ledit élément allongé (2a) sur ladite première bobine ou, alternativement, de dérouler ledit élément allongé (2a) de ladite première bobine,
- une première unité de stockage (14) pour ledit élément allongé (2a), laquelle unité est associée audit premier support,
- un deuxième support (21) pour une deuxième bobine (22) qui est prévu pour recevoir un élément allongé supplémentaire (2b) ou un film de service (2c),
- un deuxième élément d'entraînement (23) qui est associé audit deuxième support afin de faire tourner ladite deuxième bobine (22) autour d'un axe de rotation (X') de celle-ci afin d'enrouler ledit élément allongé supplémentaire (2b) ou ledit film de service (2c) sur ladite deuxième bobine ou, alternativement, de dérouler ledit élément allongé supplémentaire (2b) ou ledit film de service (2c) de ladite deuxième bobine,
- une deuxième unité de stockage (24) pour ledit élément allongé supplémentaire (2b), laquelle unité est associée audit deuxième support,
où une unité de stockage auxiliaire (30) est associée audit premier support et audit deuxième support, laquelle unité est agencée afin de permettre le passage dudit film de service (2c) entre ladite première bobine (12) et ladite deuxième bobine (22).

11. Installation selon la revendication 10, dans laquelle ladite première unité de stockage (14) est positionnée par rapport à ladite première bobine (12) du côté opposé par rapport à ladite deuxième bobine (22), et ladite deuxième unité de stockage (24) est positionnée par rapport à ladite deuxième bobine (22) du côté opposé par rapport à ladite première bobine (12).

12. Installation selon la revendication 10 ou 11, dans laquelle ladite première unité de stockage (14) comprend une pluralité de rouleaux de guidage (15), autour desquels ledit élément allongé (2a) est guidé, lesdits rouleaux de guidage étant agencés dans un plan vertical qui est essentiellement perpendiculaire audit axe de rotation (X) de ladite première bobine (12), et ladite deuxième unité de stockage (24) comprend une pluralité de rouleaux de guidage (25), autour desquels ledit élément allongé supplémentaire (2b) est guidé, lesdits rouleaux de guidage étant agencés dans un plan vertical qui est essentiellement perpendiculaire audit axe de rotation (X') de ladite deuxième bobine (22).

13. Installation selon l'une quelconque des revendications 10 à 12, dans laquelle ladite unité de stockage auxiliaire (30) comprend une pluralité de rouleaux (31), autour desquels ledit film de service (2c) est guidé, lesdits rouleaux étant agencés dans un plan vertical qui est essentiellement parallèle audit axe de rotation (X) de ladite première bobine.

14. Installation selon l'une quelconque des revendications 10 à 13, dans laquelle ladite unité de stockage auxiliaire (30) est positionnée entre ladite première bobine (12) et ladite deuxième bobine (22).

15. Installation selon l'une quelconque des revendications 10 à 14, dans laquelle un élément d'enroulement (16, 26) est associé à au moins l'un dudit premier support (11) et dudit deuxième support (21), lequel élément est prévu pour distribuer ledit élément allongé (2a, 2b) ou ledit film de service (2c) sur ladite première bobine (12) ou ladite deuxième bobine (22), et ledit au moins un élément d'enroulement (16, 26) peut être bloqué dans une position axialement externe par rapport à ladite première bobine (12) ou à ladite deuxième bobine (22), respectivement.
